# EUROPÄISCHE PATENTSCHRIFT

(11) **EP 3 475 132 B1**
(45) Veröffentlichungstag und Bekanntmachung des Hinweises auf die Patenterteilung: **11.08.2021**
(21) Anmeldenummer: 17736575.6
(22) Anmeldetag: 14.06.2017
(51) Int. Cl.: B60T 17/22, B60T 13/66

(54) **MODULARES HYDRAULISCHES BREMSSYSTEM UND EIN VERFAHREN ZUR DATENÜBERTRAGUNG FÜR EIN SCHIENENFAHRZEUG**
MODULAR HYDRAULIC BRAKING SYSTEM AND A METHOD FOR DATA TRANSMISSION FOR A RAIL VEHICLE
SYSTÈME DE FREINAGE HYDRAULIQUE MODULAIRE ET PROCÉDÉ DE TRANSFERT DE DONNÉES POUR VÉHICULE SUR RAILS

(30) Priorität: 28.06.2016 DE 102016111763
(43) Veröffentlichungstag der Anmeldung: 01.05.2019
(73) Patentinhaber: KNORR-BREMSE Systeme für Schienenfahrzeuge GmbH, 80809 München (DE)
(72) Erfinder: ARTRU, Philippe, 80797 München (DE); CLEV, Markus, 81476 München (DE); OBERPICHLER, Klaus, 80937 München (DE); FUCHS, Andreas, 82487 Oberammergau (DE)
(86) Internationale Anmeldenummer: PCT/EP2017/064473
(87) Internationale Veröffentlichungsnummer: WO 2018/001725

(56) Entgegenhaltungen:
- EP-A1- 2 927 086
- WO-A1-02/49897
- DE-A1- 3 205 846
- DE-A1-102009 042 965
- DE-A1-102010 005 938
- DE-A1-102013 201 623
- DE-A1-102014 119 101

## Beschreibung

Die Vorliegende Erfindung bezieht sich auf ein modulares hydraulisches Bremssystem laut Oberbegriff des Anspruchs 1 und ein Verfahren zur Datenübertragung auf einem Übertragungsmedium eines Schienenfahrzeugs laut Oberbegriff des Anspruchs 11.

In heutzutage üblichen Architekturen für elektrohydraulische Bremssysteme bei Schienenfahrzeugen kommen u.a. die folgenden Grundkomponenten zum Einsatz: zumindest ein Bremssteuergerät, zumindest ein Hydrogerät mit gegebenenfalls angeschlossenem Hydraulikspeicher, mehrere Bremssättel mit Bremsbelägen und Bremsscheiben. Das Bremssystem kann funktional durch einen Gleitschutz mit seinen Impulsgebern und der Lasterfassung mit ihren Lastsensoren erweitert werden. Eine (zentrale) Fahrzeugsteuerung steuert über zumindest ein Bremssteuergerät die elektrohydraulische Bremse.

Dokument DE-10 2013 201 623 A1 offenbart ein modulares hydraulisches Bremssystem für ein Schienenfahrzeug. Weiterer gattungsbildender Stand der Technik wurde in DE-32 05 846 A1, WO 02/49897 A1, EP 2927086 und DE10 2009 042 965 A1 offenbart.

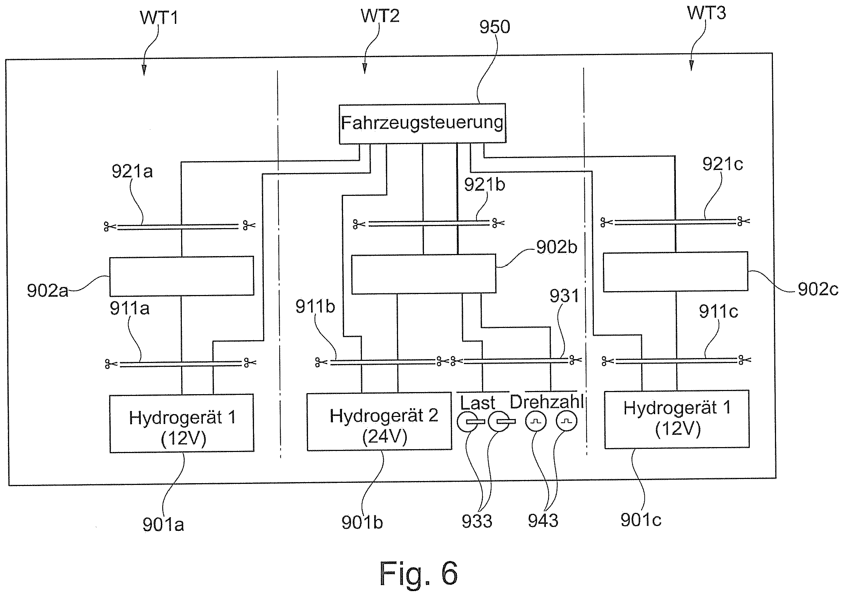

**Fig. 6** zeigt ein konventionelles Steuerungskonzept eines beispielhaften dreiteiligen Fahrzeuges mit einem ersten Fahrzeugteil WT1, einem zweiten Fahrzeugteil WT2 und einem dritten Fahrzeugteil WT3. Beispielsweise umfasst das erste Fahrzeugteil WT1 ein erstes Hydrogerät 901a und ein erstes Bremssteuergerät 902a, die über eine erste Schnittstelle 911a miteinander verbunden sind. Das erste Bremssteuergerät 902a ist außerdem über eine zweite Schnittstelle 921a mit der Fahrzeugsteuerung 950 verbunden. Das erste Hydrogerät 901a kann außerdem über die erste Schnittstelle 911a direkt mit der Fahrzeugsteuerung 950 verbunden sein.

In gleicher Weise ist das zweite Fahrzeugteil WT2 aufgebaut. So umfasst das zweite Fahrzeugteil WT2 ein zweites Hydrogerät 901b und ein zweites Bremssteuergerät 902b, die über eine dritte Schnittstelle 911b miteinander verbunden sind. Das zweite Bremssteuergerät 902b ist über eine vierte Schnittstelle 921b mit der Fahrzeugsteuerung 950 verbunden und das zweite Hydrogerät 901b ist außerdem über die dritte Schnittstelle 911b ebenfalls direkt mit der Fahrzeugsteuerung 950 verbunden. Außerdem ist das zweite Bremssteuergerät 902b über eine fünfte Schnittstelle 931 mit zumindest einem Lastsensor 933 und zumindest einem Drehzahlsensor 943 verbunden.

In gleicher Weise ist der dritte Fahrzeugteil WT3 aufgebaut, der ein drittes Hydrogerät 901c und ein drittes Bremssteuergerät 902c aufweist, die wiederum über eine sechste Schnittstelle 911c miteinander verbunden sind. Das dritte Bremssteuergerät 902c ist über eine siebente Schnittstelle 921c mit der Fahrzeugsteuerung 950 verbunden. Schließlich ist das dritte Hydrogerät 901c über die sechste Schnittstelle 911c auch direkt mit der Fahrzeugsteuerung 950 verbunden.

In dem System kommen somit in verschiedenen Wagenteilen des Schienenfahrzeuges zum Teil unterschiedliche Bremssteuergeräte 902 zum Einsatz. Die Schnittstellen 921 von der Fahrzeugsteuerung 950 zu den Bremssteuerungen 902 sind nicht einheitlich und durch festverdrahtete Signale in der Regel projektabhängig. Die Hydrogeräte 901 unterscheiden sich beispielsweise bezüglich der Nennspannung einiger Hauptkomponenten und sind deshalb nicht einheitlich ausgeführt. Insbesondere existieren neben den Schnittstellen 921 der Fahrzeugsteuerung 950 zur Bremssteuerung 902 weitere Schnittstellen 911 von der Fahrzeugsteuerung direkt zu den Hydrogeräten 901. Die angesteuerten Komponenten operieren außerdem häufig mit unterschiedlichen Spannungen, wobei die folgenden Gleichspannungen zum Einsatz kommen können: 12 V, 24 V, 36 V, 37,5, 72 V oder 110 V. Darüber hinaus existieren noch weitere Schnittstellen 931, die eine Konfiguration des entsprechenden Bremssteuergerätes 902 erfordern.

Dies führt zu uneinheitlichen, projekt- und spannungsabhängigen Schnittstellen 911, 921, 931, die eine Vereinheitlichung der darunterliegenden Funktionsebene aufgrund der dadurch entstehenden Variantenvielfalt unmöglich macht. Außerdem verursacht die Anpassung von Geräten an andere Versorgungsspannungen immer wieder Probleme bezüglich der Auswahl und Verfügbarkeit geeigneter Komponenten.

Im Weiteren erfolgt die Ansteuerung der gezeigten Komponenten bisher durch festverdrahtete Steuerleitungen. Diese Art von Ansteuerung im Fahrzeug bringt eine Reihe von Einschränkungen mit sich. So ergibt sich aufgrund der räumlichen Anordnung der Komponenten im Fahrzeug ein erheblicher Verdrahtungsaufwand. Beispielsweise ist die Fahrzeugsteuerung 950 und die Bremssteuerung 902 in der Regel in einem Dachbereich des Fahrzeuges untergebracht, während die Bremssystemkomponenten sich typischerweise in einem Fahrzeugunterbau befinden.

Unterschiedliche Funktionsanforderungen ziehen außerdem unterschiedliche Schnittstellen nach sich, insbesondere im Bereich von Bremssteuergeräten 902 und Hydrogeräten 901. Funktionale Erweiterungen oder Änderungen erfordern daher aufwendige Verdrahtungsänderungen. Die festverdrahteten Schnittstellen 911, 921 sind wie gesagt spannungsabhängig und die Schnittstelle zum elektrohydraulischen Bremssystem ist funktionsabhängig. Zusatzdaten, wie sie in modernen Architekturen üblich sind, können nicht erfasst und kommuniziert werden, da der Übertragungsweg aufgrund der Festverdrahtung fehlt. Insbesondere können detaillierte Diagnoseinformationen nicht von allen Drehgestell- oder Fahrwerksausrüstungen an die Fahrzeugsteuerung 950 übertragen werden.

Daher besteht ein Bedarf nach Bremssystemkomponenten, die die obengenannten Nachteile oder Einschränkungen nicht aufweisen.

Diese technische Aufgabe wird durch ein modulares hydraulisches Bremssystem nach Anspruch 1 und einem Verfahren nach Anspruch 11 gelöst. Die abhängigen Ansprüche beziehen sich auf vorteilhafte Weiterbildungen der Gegenstände der unabhängigen Ansprüche.

Die vorliegende Erfindung bezieht sich auf ein modulares hydraulisches Bremssystem für ein Schienenfahrzeug, welches ein Übertragungsmedium zu einer Fahrzeugelektronik (z. B. eine Fahrzeugsteuerung oder eine Bremssteuerung) aufweist. Das modulare hydraulische Bremssystem umfasst zumindest ein Funktionsmodul und eine universelle Schnittstelle zur Übertragung von Steuerdaten auf einem Signalkanal des Übertragungsmediums zwischen dem Funktionsmodul und der Fahrzeugelektronik.

Der Begriff "Bremssystem" soll im Rahmen der vorliegenden Erfindung breit ausgelegt werden und nicht zwingenderweise alle Komponenten umfassen, die für ein Bremsen eines Fahrzeuges notwendig sind. Daher soll sich das Bremssystem auch auf einzelne Komponenten beziehen, die eine bestimmte Funktionalität innerhalb des kompletten Bremssystems erfüllen. Das "Funktionsmodul" soll sich auf jede Komponente beziehen, die eine bestimmte Funktion in dem Bremssystem erfüllt. Der Begriff "Übertragungsmedium" soll breit ausgelegt werden und alle Mittel umfassen, über die Informationen mit allen Arten der Datenübertragung übertragbar sind. Die Steuerdaten sind alle Daten, die geeignet sind, um das Funktionsmodul zu steuern und/oder zu überwachen und/oder einen gegenwärtigen Status oder Zustand des Funktionsmoduls zu erfassen (einschließlich von Sensordaten).

Der Begriff "universell" soll derart ausgelegt werden, dass die betreffende Schnittstelle oder ein entsprechender Bus für beliebige Funktionsmodule (z.B. für verschiedene Hydrogeräte, Sensormodule, Gleitschutzmodule, etc.) genutzt werden kann und nicht spezifisch für ein gegebenes Funktionsmodul ist. Dadurch wird eine Vereinheitlichung der Datenübertragung zwischen den einzelnen Funktionsmodulen und der Fahrzeugelektronik ermöglicht. Beispielsweise kann die universelle Schnittstelle eine einheitliche standardisierte Schnittstelle sein.

Die universelle Schnittstelle und das Funktionsmodul können, brauchen jedoch nicht als eine Einheit (z.B. in einem gemeinsamen Gehäuse) ausgebildet sein. Vielmehr kann die universelle Schnittstelle auch als ein Schaltungsblock ausgebildet sein, an dem mehrere Funktionsmodule für verschiedene Funktionen in dem Schienenfahrzeug angeschlossen werden können, um so eine modulare Erweiterung durch nur eine Schnittstelle zu ermöglichen. Daher kann der Signalkanal insbesondere ein Datenbus sein, der verschiedene Funktionsmodule, beispielsweise über Adresszuweisungen, adressieren kann, so dass Steuerdaten, die von der Fahrzeugsteuerung oder der Bremssteuerung an die Bremssystemkomponente gesandt werden, durch die universelle Schnittstelle verschiedenen Funktionsmodulen zugewiesen werden können oder dahin übertragen werden.

Das zumindest eine Funktionsmodul ist mit zumindest einem Aktuator und/oder zumindest einem Sensor koppelbar und das zumindest eine Funktionsmodul umfasst eine Steuereinrichtung und/oder eine Modulkommunikationsschnittstelle. Die Steuereinrichtung und/oder die Modulkommunikationsschnittstelle ist/sind ausgebildet, um zumindest eine der folgenden Funktionen bereitzustellen: Steuersignale für den Aktuator bereitzustellen und/oder Sensordaten zu erfassen, das zumindest eine Funktionsmodul und/oder den Aktuator und/oder den Sensor eindeutig zu identifizieren, Funktionen dem zumindest einen Funktionsmodul und/oder dem Aktuator und/oder dem Sensor zuzuweisen oder zugewiesene Funktionen zu ändern, eine Beanspruchung eines Funktionsmoduls und/oder eines Zusatzmoduls und/oder des Aktuators und/oder des Sensors zu ermitteln und ein Ergebnis bereitzustellen. Bei den zugewiesenen Funktionen kann es sich beispielsweise um das Erfassen und die Bereitstellung spezifischer Sensordaten handeln z.B. die Bereitstellung der Sensordaten an andere Funktionsmodule. Diese Sensordaten könnten prinzipiell von verschiedenen Funktionsmodulen erfasst werden, durch die Bereitstellung kann eine Doppelerfassung vermieden werden.

Bei weiteren Ausführungsbeispielen umfasst das modulare hydraulische Bremssystem ein Steuermodul, das nicht Teil eines Funktionsmoduls sein muss. Das Steuermodul kann beispielsweise in der universellen Schnittstelle untergebracht sein. Außerdem kann zumindest ein Funktionsmodul an ein Zusatzmodul koppeln, welches eine beliebige Komponente des Bremssystems sein kann, die eine vorbestimmte Funktion bereitstellt. Das Steuermodul kann die gleichen Funktionen erfüllen wie die Steuereinrichtung. Außerdem kann es ausgebildet sein, um zumindest eine der folgenden Funktionen bereitzustellen: einen Austausch von einem Funktionsmodul oder einem Zusatzmodul zu erkennen, Funktionen dem zumindest einen Funktionsmodul und/oder dem Aktuator und/oder dem Sensor zuzuweisen oder zu ändern, eine Beanspruchung eines Funktionsmoduls und/oder eines Zusatzmoduls und/oder des Aktuators und/oder des Sensors zu ermitteln und ein Ergebnis bereitzustellen, das zumindest eine Funktionsmodul und/oder den Aktuator und/oder den Sensor eindeutig zu identifizieren und entsprechende Informationen bereitzustellen.

Das Schienenfahrzeug umfasst eine Stromversorgungsleitung zu einer Stromversorgungsquelle und die universelle Schnittstelle stellt einen Stromversorgungsanschluss für das Funktionsmodul bereit. Die universelle Schnittstelle ist ausgebildet, um die Steuerdaten über die Stromversorgungsleitung zu übertragen.

Die Bremssystemkomponente umfasst ein weiteres Funktionsmodul, welches mit dem Funktionsmodul verbunden ist und die universelle Schnittstelle ist ausgebildet, um Steuerdaten für das Funktionsmodul und das weitere Funktionsmodul weiterzuleiten. Die Adressierung der zwei Funktionsmodule kann dabei beispielsweise digital erfolgen. Beispielsweise kann ein Funktionsmodul als eine Mastereinheit fungieren, während das weitere Funktionsmodul als eine Slave- oder Satelliteneinheit fungiert, welches eine Datenkommunikation zu der universellen Schnittstelle über das Funktionsmodul (Mastereinheit) durchführt. Dementsprechend kann bei weiteren Ausführungsbeispielen die universelle Schnittstelle ausgebildet sein, um eine parallele Datenübertragung für verschiedene Funktionsmodule über das Übertragungsmedium durchzuführen.

Ausführungsbeispiele erlauben insbesondere, dass sämtliche Steuer- und Analysedaten, die zwischen der Fahrzeugsteuerung und dem Funktionsmodul ausgetauscht werden, über nur einen Signalkanal oder nur ein Übertragungsmedium übertragen werden. Somit wird keine zusätzliche Festverdrahtung erforderlich bzw. kann lediglich redundant ausgebildet sein, um beispielsweise bestimmten Sicherheitsanforderungen zu genügen. Beispielsweise kann das Übertragungsmedium ein digitales Datenbussystem (universeller Bus) sein und die universelle Schnittstelle kann ausgebildet sein, um eine Datenübertragung nach einem Multiplexverfahren durchzuführen. Die Datenübertragung kann dabei insbesondere funktionsunabhängig erfolgen.

Bei weiteren Ausführungsbeispielen ist das Funktionsmodul ausgebildet, um alle Daten zwischen dem Funktionsmodul und der Fahrzeugelektronik nur über das Übertragungsmedium unter Nutzung der universellen Schnittstelle zu übertragen.

Optional kann bei weiteren Ausführungsbeispielen die universelle Schnittstelle an eine Festverdrahtungsleitung zu der Fahrzeugelektronik koppeln, um sicherheitsrelevante Daten zwischen der Fahrzeugelektronik und dem Funktionsmodul zu übertragen. Die sicherheitsrelevanten Daten beziehen sich insbesondere auf Daten (Befehle) zum Einleiten einer Sicherheitsbremse und/oder auf Signale, die die Notfahrt des Fahrzeuges erlauben. Die Festverdrahtung ist jedoch nicht zwingend erforderlich. Beispielsweise kann auch die universelle Schnittstelle eine sichere Datenübertragung sicherstellen, wobei die sichere Datenübertragung ein vorgegebenes Sicherheitsniveau erfüllt (z.B. bestimmte Daten redundant überträgt oder eine Rückbestätigung ermöglicht). In einem solchen Fall braucht keine separate Signalleitung für sicherheitsrelevante Funktionen ausgebildet zu sein.

Bei weiteren Ausführungsbeispielen umfasst das Funktionsmodul zumindest eine aus den folgenden Komponenten: ein Hydrogerät, ein Bremssattel, ein Gleitschutzmodul, ein Sensormodul, eine Bremsmittelenergiewandlungseinheit, ein Hilfslösegerät, eine Sandung, eine Magnetschienenbremse. Außerdem kann die universelle Schnittstelle ausgebildet sein, um spezifische Steuerdaten an verschiedene Funktionsmodule weiterzuleiten.

Bei weiteren Ausführungsbeispielen ist das Übertragungsmedium drahtgebunden, drahtlos oder glasfaserbasiert.

Die beanspruchte Erfindung kann in einem modular erweiterbaren System verwendet werden, mit zumindest zwei (oder zumindest einem) der zuvor genannten Bremssystemkomponenten und einem Übertragungsmedium, das zumindest einen Signalkanal bereitstellt, um Steuerdaten zwischen den zumindest zwei Bremssystemkomponenten und der Fahrzeugelektronik auszutauschen. Der Signalkanal kann beispielsweise an eine Vielzahl von Komponenten des Schienenfahrzeugs koppeln, um das modular erweiterbare System zu bilden. Das System kann optional eine Spannungsversorgung umfassen, die einen Spannungswandler aufweist und ausgebildet ist, um eine universelle Spannungsversorgung für die zumindest zwei Bremssystemkomponenten bereitzustellen. Somit ermöglichen Ausführungsbeispiele eigenständige Funktionsmodule, die je nach Bedarf zusammengestellt werden können. Insbesondere können dadurch verschiedene Versorgungsspannungen, die in verschiedenen Fahrzeugen vorhanden sein können, durch das modulare hydraulische Bremssystem genutzt werden.

Die vorliegende Erfindung bezieht sich auch auf ein Schienenfahrzeug mit einer Fahrzeugelektronik, zumindest einer der zuvor beschriebenen Bremssystemkomponenten oder einem zuvor der beschriebenen modular erweiterbaren Systeme und einem Übertragungsmedium, das zumindest einen Signalkanal bereitstellt, um Steuerdaten zwischen der Fahrzeugelektronik und einem oder mehreren Funktionsmodulen auszutauschen.

Die vorliegende Erfindung bezieht sich auch auf ein Verfahren zur Datenübertragung auf einem Übertragungsmedium wie es im Anspruch 11 definiert ist. Das Verfahren umfasst folgende Schritte: Übertragen von Steuerdaten zwischen einer universellen Schnittstelle und einer Fahrzeugelektronik, Übertragen von Funktionsmoduldaten zwischen der universellen Schnittstelle und zumindest einem Funktionsmodul und Umwandeln der Funktionsmoduldaten in Steuerdaten oder der Steuerdaten in Funktionsmoduldaten durch eine universelle Schnittstelle.

Die genannte Reihenfolge der Schritte impliziert keine zeitliche Abfolge oder nur insoweit, wie es zwingend erforderlich ist.

Unter Steuerdaten sollen alle Informationen verstanden werden, die an die Funktionsmodule übertragen werden sollen oder von dort erhalten werden. Die Funktionsmoduldaten sind hardware-spezifische Daten, um beispielsweise Aktuatoren in den Funktionsmodulen anzusteuern oder Sensoren auszulesen, um so beispielsweise die Informationen zu erhalten, die durch die Steuerdaten übermittelt werden.

Die Ausführungsbeispiele der vorliegenden Erfindung werden besser verstanden mit der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine elektro-hydraulische Bremssystemkomponente gemäß einem Ausführungsbeispiel der vorliegenden Erfindung.
- Fig. 2: zeigt ein Flussdiagramm für ein Verfahren zur Datenübertragung gemäß Ausführungsbeispielen der vorliegenden Erfindung.
- Fig. 3: zeigt ein modulares hydraulisches Bremssystem gemäß Ausführungsbeispielen.
- Fig. 4: zeigt ein weiteres Ausführungsbeispiel für den modularen Aufbau einer Drehgestell- oder Fahrgestellausrüstung.
- Fig. 5: veranschaulicht eine Stromversorgung für die einzelnen Funktionsmodule gemäß weiterer Ausführungsbeispiele.
- Fig. 6: zeigt ein konventionelles Steuerungskonzept.

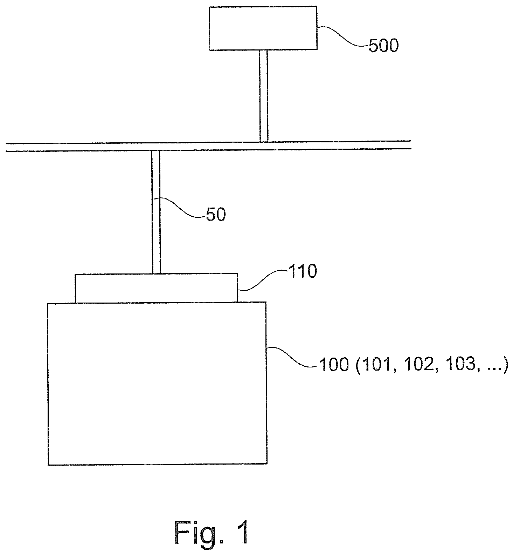

**Fig. 1** zeigt eine elektro-hydraulische Bremssystemkomponente als ein einfaches Ausführungsbeispiel für das modulare hydraulische Bremssystem gemäß der vorliegenden Erfindung, die für ein Schienenfahrzeug geeignet ist, welches ein Übertragungsmedium 50 zu einer Fahrzeugelektronik 500 aufweist. Die Bremssystemkomponente umfasst zumindest ein Funktionsmodul 100 und eine universelle Schnittstelle 110 zur Übertragung von Steuerdaten über einen Signalkanal auf dem Übertragungsmedium 50 zwischen dem Funktionsmodul 100 und der Fahrzeugelektronik 500, wobei die Fahrzeugelektronik insbesondere eine Fahrzeugsteuerung und/oder eine Bremssteuerung umfassen kann.

Das gezeigte einfachste modulare hydraulische Bremssystem ist modular erweiterbar, ohne dass die universelle Schnittstelle 110 (d.h. eine allgemeine Kommunikationsschnittstelle) zum Fahrzeug geändert werden muss. Dazu kann das Bremssystem einen universellen Bus (der drahtverbunden oder auch drahtlos sein kann) als Übertragungsmedium 50 nutzen, der einen Anschluss der universellen Schnittstelle 110 des modularen hydraulischen Bremssystems an einer Bremssteuerung oder einer Fahrzeugsteuerung erlaubt. Dieser universelle Bus 50 kann beispielsweise ein bereits vorhandener Bus (z.B. ein CAN-Bus) oder ein neuer unabhängiger Bus sein.

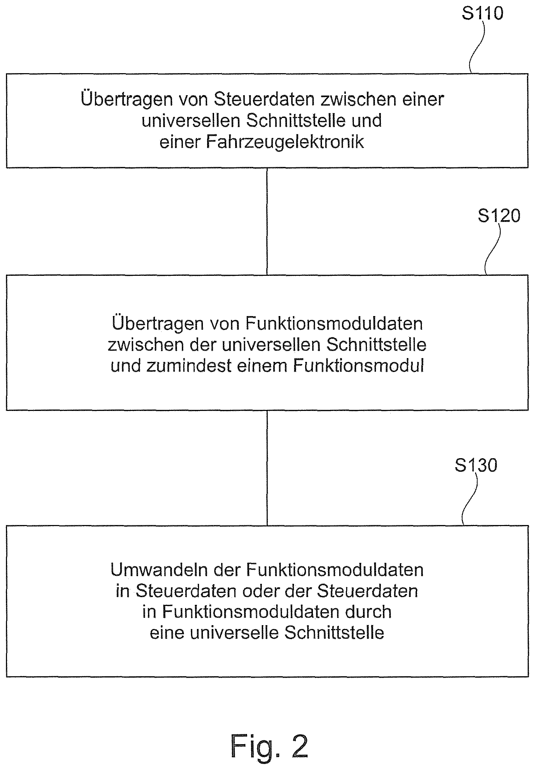

**Fig. 2** zeigt ein Flussdiagramm für ein Verfahren zur Datenübertragung auf einem Übertragungsmedium, wobei das Verfahren in dem modularen hydraulischen Bremssystem implementiert sein kann. Das Verfahren umfasst: Übertragen S110 von Steuerdaten zwischen der universellen Schnittstelle 110 und der Fahrzeugelektronik 500, Übertragen S120 von Funktionsmoduldaten zwischen der universellen Schnittstelle 110 und dem zumindest einen Funktionsmodul 100 und Umwandeln S130 der Funktionsmoduldaten in Steuerdaten oder der Steuerdaten in Funktionsmoduldaten durch eine universelle Schnittstelle 110. Außerdem können Daten über einen Rückkanal an die Fahrzeugelektronik 500 übertragen werden und beispielsweise zu Statusabfragen oder zur Diagnose genutzt werden.

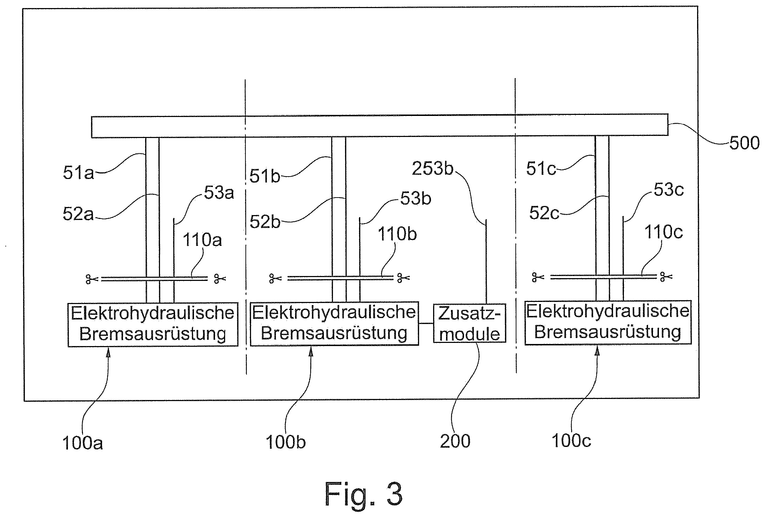

**Fig. 3** zeigt das modulare hydraulische Bremssystem, das die universelle Schnittstelle 110 gemäß Ausführungsbeispielen der vorliegenden Erfindung nutzt. In dem gezeigten Ausführungsbeispiel ist ein erstes Funktionsmodul 100a, ein zweites Funktionsmodul 100b und ein drittes Funktionsmodul 100c vorhanden, die jeweils über eine universelle Schnittstelle 110a, 110b, 110c mit einer Bremssteuerung oder Fahrzeugsteuerung 500 verbunden sind. Die einzelnen Funktionsmodule 100a, 100b, 100c können beliebige elektrohydraulische Bremsausrüstungen sein und sich an verschiedenen Fahrzeugachsen oder in verschiedene Fahrzeugteile oder in miteinander verbundenen Fahrzeugen befinden und werden gemeinsam durch eine Fahrzeugsteuerung oder Bremssteuerung 500 angesteuert.

In dem gezeigten Ausführungsbeispiel ist diese Verbindung über jeweilige festverdrahtete Leitungen 52a, 52b, 52c und jeweilige Bus- oder Steuerleitungen 51a, 51b, 51c implementiert. Außerdem sind die Funktionsmodule 100a, 100b, 100c über Energieversorgungsleitungen 53a, 53b, 53c jeweils an eine Energieversorgung (nicht gezeigt) angeschlossen und werden von dort mit Energie versorgt.

Die universellen Schnittstellen 110a, 110b, 110c können für alle Funktionsmodule 100a, 100b, 100c in der gleichen Art und Weise ausgebildet werden. Dadurch wird es möglich, dass das Bremssystem flexibel durch weitere Module erweitert werden kann. Beispielsweise koppelt das zweite Funktionsmodul 100b an ein optionales Zusatzmodul 200, das beispielsweise eine Zusatzsensorik bieten kann. Das Zusatzmodul 200 kann über eine Versorgungsleitung 253b direkt mit der Energieversorgung verbunden sein. Die gezeigte Modularisierung wird durch die universelle Schnittstelle 110 erreicht, die einheitlich, flexibel, projekt- und spannungsunabhängig sein kann und entsprechende Anschlüsse für alle Leitungen 51, 52, 53 aufweisen kann.

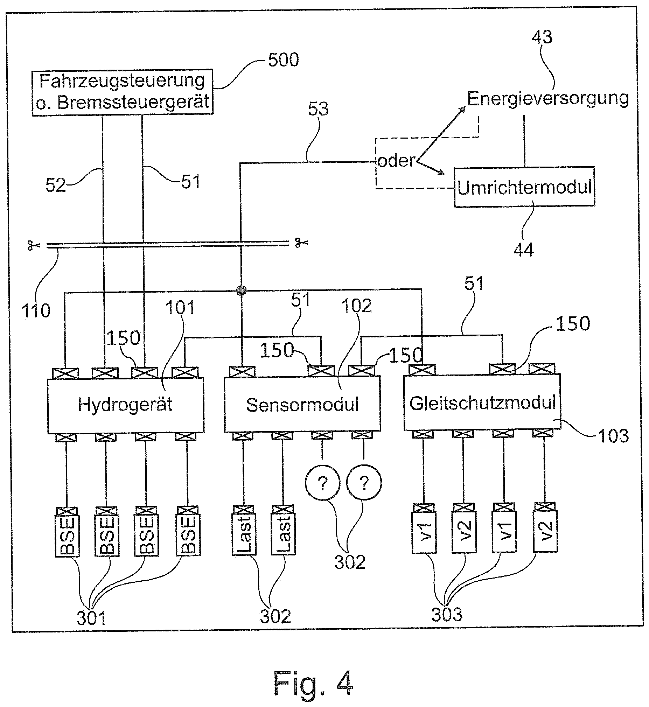

**Fig. 4** zeigt ein weiteres Ausführungsbeispiel für den modularen Aufbau einer Drehgestell- oder Fahrgestellausrüstung. Die Funktionsmodule 100 umfassen in der Fig. 4 beispielhaft ein Hydrogerät 101, ein Sensormodul 102 und ein Gleitschutzmodul 103, die über eine Energieversorgungsleitung 53 wahlweise an ein Umrichtermodul 44 oder eine zentrale Energieversorgung 43 angeschlossen sind, um von dort mit Energie versorgt zu werden. Das Umrichtermodul 44 ist beispielsweise ausgebildet, um eine Anpassung der Energieversorgung (z.B. Anpassung der elektrischen Spannung) an die Erfordernisse der einzelnen Funktionsmodule 101, 102, 103 durchzuführen.

Außerdem sind die Funktionsmodule 101, 102, 103 über Steuerungsleitungen 51 als Beispiel für das Übertragungsmedium mit der Fahrzeugsteuerung oder dem Bremssteuergerät 500 verbunden. Diese Steuerleitungen 51 können beispielsweise als Bus-Leitungen als Teil eines digitalen Bussystems als optische Signalverbindungen ausgebildet sein, über die digitale Daten übertragen werden. Daher brauchen die Funktionsmodule 101, 102, 103 nicht einzeln mit der Fahrzeugsteuerung 500 verbunden werden. Vielmehr reicht es aus, dass beispielsweise das Hydrogerät 101 mit der Fahrzeugsteuerung oder dem Bremssteuergerät 500 verbunden ist. Alle weiteren Funktionsmodule 102, 103 können jeweils mit dem Hydrogerät 101 verbunden sein, das die Weiterleitung der Daten von und zu dem beispielhaften Sensormodul 102 und dem beispielhafte Gleitschutzmodul 103 vornimmt.

Außerdem ist eine optionale Festverdrahtung 52 als Verbindung zwischen der Fahrzeugsteuerung oder dem Bremssteuergerät 500 und dem Hydrogerät 101 ausgebildet. Diese Festverdrahtung 52 kann ebenfalls durch die universelle Schnittstelle 110 verlaufen. Die universelle Schnittstelle 110 kann dazu einen entsprechenden Port zur Durchleitung der entsprechenden Signale aufweisen. Damit wird es möglich, dass von und zum Hydrogerät 101 sicherheitsrelevante Signale redundant übertragen werden. Des Weiteren können über die universelle Schnittstelle 110 weitere Signale übertragen werden, die einer hohen Verfügbarkeit einzelner Funktionen dienen (wie beispielsweise Signale, die eine Notfahrt des Fahrzeugs erlauben). Das Hydrogerät 101 kann mit einer Bremssattelelektronik (BSE) 301 verbunden sein. Ebenso kann das Sensormodul 102 mit verschiedenen Last-Sensoren 302 verbunden sein. Das Gleitschutzmodul 103 kann beispielhaft mit einer Vielzahl von Impulsgebern oder Drehzahlsensoren 303 verbunden sein.

Beispielsweise ist das Fahrzeugsteuergerät oder das Bremssteuergerät 500 (Fahrzeugelektronik) als eigenständiges Steuergerät in einem Dachbereich von Schienenfahrzeugen ausgebildet und die Funktionsmodule 100 (z.B. ein Hydrogerät 101, ein Sensormodul 102 oder ein Gleitschutzmodul 103) sind in einem unteren Wagenkasten oder in der Nähe zum Fahrwerk und Drehgestell in der Nähe des Bremssattel 301 oder der Lastsensoren 302 oder der Impulsgeber 303 ausgebildet.

Das in der Fig. 4 gezeigte Hydrogerät 101 kann somit optional als eine Masterkomponente genutzt werden, an welche eine oder mehrere weitere Funktionsmodule als Satellitensysteme (Slave) 102, 103 angekoppelt werden können, so dass das System flexibel erweiterbar ist. Die Kommunikation zu der Fahrzeugsteuerung oder zu der Bremssteuerung 500 kann daher über das vorhandene Hydrogerät 101 als Mastereinheit erfolgen. Die Datenübertragung kann dazu beispielsweise eine Adressierung nutzen, um den Absender bzw. den Adressaten der zu übertragenden Daten zu identifizieren. Gleiches gilt für die Stromversorgung. Auch hier ist es möglich, dass die universelle Schnittstelle 110 nur einmal ausgebildet ist und alle weiteren Funktionsmodule über die eine universelle Schnittstelle sowohl mit Steuerdaten als auch mit einer Versorgungsspannung versorgt werden. Über die universelle Schnittstelle 110 des modularen hydraulischen Bremssystems ist somit jedes Funktionsmodul 100 innerhalb des Systems individuell identifizierbar. Dazu werden eine Identifikation (ID) oder Adressen vergeben, die jedem Funktionsmodul 100 und jedem Zusatzmodul zugeordnet wird und eine eindeutige Identifizierung erlaubt.

Im Unterschied zu dem in der Fig. 4 gezeigten Ausführungsbeispiel umfasst in dem Ausführungsbeispiel der Fig. 3 jede Bremsausrüstung (Hydrogerät, Sensormodul, Gleitschutzmodul, etc.) eine eigene universelle Schnittstelle 110.

Die einzelnen Funktionsmodule können die folgenden Komponenten aufweisen:
Das Hydrogerät 101 umfasst beispielsweise eine Elektronikplatine mit einer CPU und funktionalen Modulen, die als eine Steuereinrichtung ausgebildet sein können, einen Eingang/Ausgang für den Bus, einen Festverdrahtungseingang/-ausgang, einen Programmspeicher, einen Parameterspeicher, eine interne Stromversorgung, einen Spannungssensor und Schnittstellen für Zusatzmodule, Drucksensoren, Ventile, Motoren und Schalter.

Das Sensormodul 102 umfasst beispielsweise eine CPU, die als eine Steuereinrichtung ausgebildet sein kann, einen Eingang/Ausgang für den Bus, einen Programmspeicher, einen Parameterspeicher, eine interne Stromversorgung und ist beispielsweise in einem geeigneten Gehäuse für die Installation im unteren Wagenkasten vorgesehen und umfasst beispielhaft Schnittstellen für Sensoren. Das Sensormodul 102 erkennt beispielsweise Fehler angeschlossener Sensoren, wie zum Beispiel Kabelabrisse, Kurzschlüsse, Bereichsüberschreitungen, Konfigurationsfehler, sowie eigene interne Fehler und gibt entsprechende Diagnosemeldungen über seine Buskommunikationsstelle aus.

Das Gleitschutzmodul 103 ist beispielsweise in einem geeigneten Gehäuse für die Installation im unteren Wagenkasten vorgesehen und umfasst beispielhaft die folgenden Schnittstellen: einen Impulsgeber, Buskommunikationsschnittstellen, eine Stromversorgung und Softwaremodule. Das Gleitschutzmodul 103 kann auch eine Steuereinrichtung aufweisen und liest zyklisch alle erforderlichen Signale der angeschlossenen Fahrzeugsteuerung oder Bremssteuerung 500 über die Buskommunikationsschnittstelle aus und die Frequenzen der angeschlossenen Impulsgeber 302 ein. Aus diesen Daten berechnet das Gleitschutzmodul 103 einen Gleitschutzreduzierwert und gibt diesen über den Kommunikationsbus an den im Hydrogerät 101 befindlichen Druckregler weiter. Zusätzlich erhält das Fahrzeug Informationen über den Gleitschutzstatus.

Die Funktionsmodule 100 in dem Ausführungsbeispiel der Fig. 4 weisen beispielhaft eigene Modulkommunikationsschnittstellen 150 und jeweils eine Steuereinrichtung (nicht gezeigt) auf. Die Modulkommunikationsschnittstellen 150 sind beispielsweise ausgebildet, um Steuerdaten über die Busleitung 51 zu empfangen und diese an die Steuereinrichtung zu übermitteln, um das entsprechende Funktionsmodul 101, 102, 103 bzw. die Aktuatoren/Sensoren des einzelnen Funktionsmoduls anzusteuern. Optional können die Modulkommunikationsschnittstellen 150 auch direkt vorhandene Aktuatoren oder Sensoren ansteuern.

Die jeweilige Steuereinrichtung kann Steuer- und Regelfunktionen erfüllen und stellt über die universelle Schnittstelle 110 die zur Steuerung und Regelung erforderlichen Signale als auch die Versorgungsspannung bereit. Dazu ist ein einziger Bus zur Ansteuerung ausreichend und die Ansteuersignale können über den Bus spannungsunabhängig an das modulare hydraulische Bremssystem übermittelt werden. Die an dem Bremssystem angeschlossenen Aktuatoren/Sensoren 301, 302, 303 können so autark, spannungsunabhängig über die universelle Schnittstelle 110 angesteuert werden. Dazu können beispielsweise die Datenleitungen 51 dienen, wobei die Stromversorgung unabhängig von der Ansteuerung (und somit funktionsunabhängig) über die Versorgungsleitung 53 erfolgen kann.

Die jeweilige Steuereinrichtung kann außerdem die Beanspruchung des einzelnen Funktionsmoduls 100 oder Zusatzmoduls 200 erfassen und einen Verschleiß oder eine Auslastung ermitteln, um so auf eine erforderliche Wartung hinzuweisen. Somit agieren die Funktionsmodule 100 autark und unabhängig von einer zentralen Steuerung und können flexibel dem System hinzugefügt und entnommen werden, wobei ständig eine Überwachung möglich ist, in welchem Maß ein Funktionsmodul 100 in der Vergangenheit bereits beansprucht wurde.

Abgesehen von den jeweiligen Steuereinrichtungen der Funktionsmodule kann das modulare hydraulische Bremssystem außerdem ein Steuermodul umfassen. Unter Nutzung dieses Steuermoduls und/oder der universellen Schnittstelle 110 kann eine vorhandene Konfiguration (d.h. welche Funktionsmodule und Zusatzmodule installiert sind) ermittelt werden. Bei weiteren Ausführungsbeispielen melden sich alle vorhandene Funktionsmodule 100 und optionale Zusatzmodule 200 bei dem Steuermodul an. Somit wird es möglich, dass beispielsweise die Fahrzeugelektronik gezielt die Konfiguration des modularen hydraulischen Bremssystems abfragen kann und genau weiß, welche Module vorhanden sind. Gleichzeitig wird es dadurch möglich, einen Austausch von Funktionsmodulen 100 über die universelle Schnittstelle 110 des modularen hydraulischen Bremssystems zu erkennen, da sich die entsprechenden Funktionsmodule 100 oder Zusatzmodule 200 bei der universellen Schnittstelle 110 oder dem vorhandenen Steuermodul anmelden und abmelden (z.B. wenn sie ersetzt werden). Das Steuermodul kann beispielsweise Teil der universellen Schnittstelle 110 sein, muss es aber nicht.

Gemäß Ausführungsbeispielen der vorliegenden Erfindung können die Funktionsmodule 101, 102, 103 modular in das System eingefügt werden, so dass das System durch Hinzufügen weiterer Funktionseinheiten ohne zusätzlichen Verdrahtungsaufwand erweitert werden kann. Die Funktionsmodule erhalten eine Identifikation, wobei die Identifikation wie auch Diagnosedaten, Zustandsdaten, Beanspruchungsdaten, Parameter- und/oder Konfigurationsdaten und Zusatzdaten während des Fahrzeugbetriebs über die universelle Schnittstelle 110 abfragbar, meldbar und speicherbar sind. Dies kann beispielsweise für den Service, Wartung, Reparatur und eine Überholung genutzt werden.

Das modulare hydraulische Bremssystem ist somit funktional erweiterbar, ohne dass die universelle Schnittstelle 110 geändert werden braucht. Vielmehr können an den einen Bus 50 (siehe Fig. 1) eine beliebige Anzahl von Funktionsmodule 100 angeschlossen werden, die über den einen Bus 50 mit Steuersignalen versorgt werden.

Bei weiteren Ausführungsbeispielen können die Funktionen der einzelnen Funktionsmodule 100 (z.B. die Sensorik) frei aufgeteilt werden, ohne dass es Auswirkungen auf die universelle Schnittstelle 110 hat. Zum Beispiel kann das Gleitschutzmodul 103 eine Drehzahl selbst erfassen oder dazu andere vorhandene Sensoren 303 nutzen. Somit können die Funktionen ortsunabhängig erfasst und verarbeitet werden (z.B. durch die Steuerungseinrichtung und/oder durch das Steuermodul).

Die Modulkommunikationsschnittstelle 150 erlaubt es, dass jedes Funktionsmodul 100 und Zusatzmodul 200 eindeutig identifizierbar ist. Außerdem kann das modulare hydraulische Bremssystem ausgegliederte Systemmodule identifizieren. Über die universelle Schnittstelle 110 des modularen hydraulischen Bremssystems oder über die eigenen Kommunikationsschnittstellen 150 der Funktionsmodule 100 ist es möglich, eine Beanspruchung der einzelnen Funktionsmodule und Zusatzmodule individuell zu erfassen und den entsprechenden Modulen zuzuordnen. Damit wird es beispielsweise möglich, genau zu erfassen, welches Funktionsmodul 100 in der Vergangenheit wie stark beansprucht wurde, so dass notwendige Wartungen und Servicehandlungen gezielt vorgenommen werden können, wenn ein bestimmtes Modul einen bestimmten Beanspruchungsgrad erreicht hat.

Außerdem wird es somit möglich, einem Nutzer anzuzeigen, wann ein bestimmtes Modul (Funktionsmodul 100 oder Zusatzmodul 200) ausgetauscht bzw. gewartet werden soll. Über die eigene Kommunikationsschnittstelle 150 der Funktionsmodule 100 ist es außerdem möglich, Servicegeräte anzuschließen, um die Beanspruchung des entsprechenden Moduls zu erfassen. Somit können die Funktionsmodule 100 selbst autark agieren, d.h. sie können zu dem System hinzugefügt werden, davon weggenommen werden, separat einzeln analysiert werden oder auch über das Steuermodul zentral erfasst und in ihrer Beanspruchung analysiert werden.

Alle Daten von Sensoren, die sich in den Funktionsmodulen 100 befinden, können so allen anderen Funktionsmodulen 100 grundsätzlich zugänglich gemacht werden und über die Schnittstelle 110 übertragen werden (bzw. abgefragt werden). Alle Funktionsmodule 100 sind dabei für nur eine, vorteilhafterweise die am häufigsten verwendete oder für eine standardisierte Versorgungsspannung ausgelegt. Alle Funktionsmodule 100 können eine Versorgungsspannungs-Anpasseinrichtung haben, die ausgebildet ist, um eine Leistungsversorgung an andere Versorgungsspannungen zu unterstützen. Alle Funktionsmodule 100 können eine Software-Installation bzw. einen Software-Update über die Schnittstelle100 unterstützen.

Außerdem können die einzelnen Funktionsmodule100 noch die folgenden spezifischen Anforderungen erfüllen. Die Hydrogeräte 101 können identische Schnittstellen zur Ansteuerung ihrer elektrohydraulischen Funktionen aufweisen. Alle Hydrogeräte 101 können die gleiche Leistungsversorgung ihrer Komponenten nutzen und sind autark bei der Steuerung ihrer Druckversorgung, wobei vorgegebene Sollwerte des Bremsdruckes einstellbar sind. Die Hydrogeräte 101 erhalten Steuerbefehle über die Schnittstelle 110, die für die Umsetzung der erforderlichen elektrohydraulischen Komponenten geeignet sind.

Außerdem können Hydrogeräte 101 über die Schnittstelle 110 einen Gleitschutzreduzierwert einlesen und in der Druckregelung berücksichtigen. Außerdem können die Hydrogeräte 101 eine Eigendiagnose ihrer elektrohydraulischen Funktionen ausführen. Die Hydrogeräte 101 umfassen optional eine Zusatzsensorik und Daten dieser Zusatzsensorik können während des Fahrzeugbetriebs dem Hydrogerät 101 gemeldet bzw. von dort abgefragt werden.

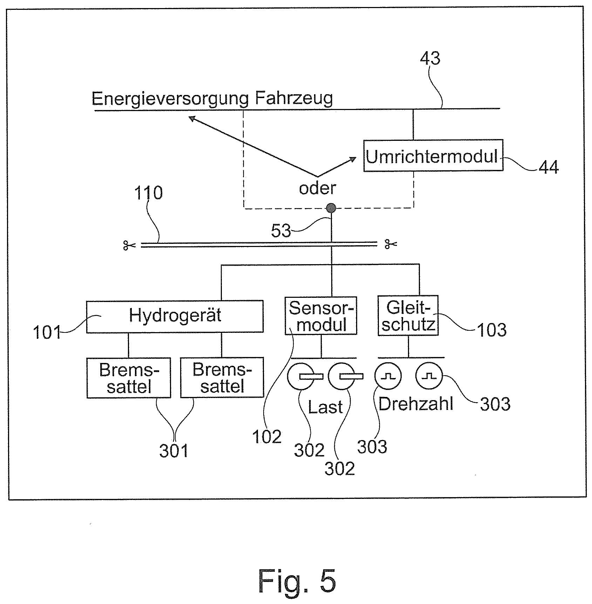

**Fig. 5** veranschaulicht eine Stromversorgung für die einzelnen Funktionsmodule 101, 102, 103. Die Stromversorgung der Funktionsmodule erfolgt im Regelfall durch die Spannungsversorgung 43 des Fahrzeuges. Alle Funktionsmodule 101, 102, 103 können für die am häufigsten vorkommende oder für eine standardisierte Versorgungsspannung entsprechend entwickelt sein, so dass sie ohne Zusatzmaßnahmen angeschlossen werden können. Falls sich die Versorgungsspannung des Fahrzeuges von den jeweiligen Versorgungsspannungen der Module unterscheiden sollte, kann ein Umrichtermodul 44 vorgesehen sein, welches eine entsprechende Anpassung der Spannungswerte durchführt. Das Umrichtermodul 44 kann auch Teil der Bremssystemkomponente sein, die optional in einem gemeinsamen Gehäuse untergebracht sein können.

Fig. 5 zeigt als Funktionsmodule 100 beispielhaft das Hydrogerät 101, das Sensormodul 102 und das Gleitschutzmodul 103, wobei das Hydrogerät 101 an die Bremssättel 301, das Sensormodul 102 an zumindest einen Lastsensor 302 und das Gleitschutzmodul 103 an zumindest eine Drehzahlmesseinrichtung 303 koppeln. Das Hydrogerät 101, das Sensormodul 102 und das Gleitschutzmodul 103 sind über Versorgungsleitungen 53 über die Schnittstelle 110 mit der Energieversorgung des Fahrzeuges 43 oder optional mit dem Umrichtermodul 44 verbunden, um eine entsprechende Versorgungsspannung für die Funktionsmodule 101, 102, 103 zu erhalten.

Somit wird es möglich, eine vereinheitliche Versorgungsspannung bereitzustellen, die von allen Funktionsmodulen 100 nutzbar ist. Damit wird das System flexibel erweiterbar, da weder neue Datenleitungen noch Versorgungsleitungen erforderlich sind bzw. nur über die universelle Schnittstelle 110 angeschlossen zu werden brauchen.

Die Schnittstelle zur Energieversorgung ist auf einen standardisierten Spannungswert ausgelegt (beispielsweise 12 V oder 24 V) und ist über zusätzliche Umrichtermodule an andere Versorgungsspannungen anpassbar. Daher kann unter Nutzung des Spannungsumrichters 44 eine Anpassung an unterschiedliche Fahrzeugspannungen erfolgen, ohne dass die universelle Schnittstelle 110 zum modularen hydraulischen Bremssystem geändert werden braucht.

Ausführungsbeispiele der vorliegenden Erfindung bieten die folgenden Vorteile:
Eine Standardisierung wird durch eine einheitliche, flexible, projekt- und spannungsunabhängige Schnittstelle 110 zu Drehgestell- / Fahrwerksausrüstungen (Funktionsmodule 101, 102, 103) erreicht. Durch eine einheitliche Spannungsversorgung wird eine Vereinheitlichung der elektrohydraulischen Gerätekomponenten erreicht. Außerdem können kostengünstige vorgefertigte Standardgeräte in Basisausführung genutzt werden. Dadurch können für die einzelnen Funktionsmodule wie beispielsweise das Hydrogerät 101, das Sensormodul 102 oder das Gleitschutzmodul 103 universelle Bauteile genutzt werden, die als Standardgeräte in Basisausführungen vorgefertigt sein können und somit ein erhebliches Kosteneinsparpotential bieten.

Weitere Vorteile von Ausführungsbeispielen sind der Wegfall von projektspezifischen Verkabelungen und die Nutzung standardisierter Stromlaufpläne, Schaltpläne oder Softwaremodulen. Insbesondere kann durch die Nutzung der universellen Schnittstelle 110 der Verdrahtungsaufwand erheblich reduziert werden und moderne Zusatzdienste, die die universelle Schnittstelle nutzen wie beispielsweise zustandsbasierte Instandhaltung, umgesetzt werden. Schließlich erlauben Ausführungsbeispiele der vorliegenden Erfindung ein einheitliches Vorgehen bei Service und Wartung der Hydrogeräte101, da identische Basistechnologien genutzt werden können.

Das Sensormodul 102 ist frei konfigurierbar bzw. kann über die Eingabe von Parametern entsprechend konfiguriert werden. Das Sensormodul 102 erlaubt eine Eigendiagnose und eine Diagnose der angeschlossenen Sensoren, wobei die Diagnoseinformationen über die Schnittstelle 110 ausgegeben werden können. Das Gleitschutzmodul 103 erlaubt den Anschluss einer vordefinierten Anzahl von Impulsgebern 303. Das Gleitschutzmodul 103 übernimmt optional die Stromversorgung der angeschlossenen Impulsgeber 303. Alle Daten von an dem Gleitschutzmodul 103 angeschlossenen Sensoren werden über die universelle Schnittstelle 110 des Gleitschutzmoduls 103 abfragbar bzw. meldbar sein. Auch das Gleitschutzmodul 103 kann über die Eingabe von Parametern entsprechend konfiguriert werden. Das Gleitschutzmodul 103 kann außerdem über seine Schnittstelle Gleitschutzsignale empfangen und auswerten. Das Gleitschutzmodul 103 kann außerdem auf der Basis der über seine Schnittstelle 110 empfangenen Gleitschutzsignale und seinen Impulsgebersignalen einen Gleitschutzreduzierwert berechnen und über seine Schnittstelle 110 ausgeben. Auch das Gleitschutzmodul 103 erlaubt eine Eigendiagnose und eine Diagnose der angeschlossenen Sensoren und kann die Diagnoseinformationen über seine Schnittstelle ausgeben.

Das Hydrogerät kann durch die beschriebene Systemarchitektur leicht um Zusatzfunktionen erweitert werden, weil der Datenaustausch immer über die gleiche identische Schnittstelle laufen kann.

Aspekte von Ausführungsbeispielen der vorliegenden Erfindung können auch wie folgt zusammengefasst werden:
Eine Kommunikationsschnittstelle (universelle Schnittstelle 110) zwischen der Fahrzeugelektronik 500 eines Schienenfahrzeugs und einem Subsystem 100 einer Bremsanlage soll nicht wie üblich über einen oder mehrere Leitungssätze für gewöhnliche elektrische Signale verfügen, sondern mittels eines Signalkanals 50 Informationen übertragen. Damit enthält diese Schnittstelle 110 nur noch einen Signalkanal 50, eine Stromversorgungsleitung 53 und eventuell noch wenige Verkabelung für sicherheitsrelevante Funktionen wie zum Beispiel eine Leitung zur Einleitung einer Sicherheitsbremsung.

Der Signalkanal oder das Übertragungsmedium kann eine oder mehrere digitale Datenbussysteme (wie zum Beispiel einem CAN-BUS) aufweisen. Optional kann der Signalkanal eine Funklösung darstellen. Es ist ebenfalls möglich, dass der Signalkanal 50 seine Daten über eine Stromversorgungsleitung 53 überträgt (wie zum Beispiel einem PowerLAN).

Bei Ausführungsbeispielen kann die Verkabelung für sicherheitsrelevante Funktionen entfallen, weil das Sicherheitsniveau des Datenkanals die übliche geforderte und notwendige Sicherheitsstufe eines Schienenfahrzeugs aufweist.

### BEZUGSZEICHENLISTE

- 43: Energieversorgung
- 44: Umrichtermodul
- 50: Übertragungsmedium/Signalkanal
- 51: Bus-Leitung
- 52: Festverdrahtung
- 53: Stromversorgungsverbindung
- 100: Funktionsmodul
- 101: Hydrogerät
- 102: Sensormodul
- 103: Gleitschutzmodul
- 110: universelle Schnittstelle
- 150: Modulkommunikationsschnittstelle
- 200: Zusatzmodul
- 301: Bremssatteleinheiten
- 302: Lastsensoren
- 303: Impulsgeber
- 500: Fahrzeugelektronik (Bremssteuerung oder Fahrzeugsteuerung)
- 911, 921, 931: konventionelle Schnittstellen
- 901: konventionelle Hydrogeräte
- 950: Fahrzeugsteuerung
- 902: Bremssteuerung
- 933: Lastsensoren
- 943: Drehzahlsensoren

## Patentansprüche

1. Modulares hydraulisches Bremssystem für ein Schienenfahrzeug, wobei das Schienenfahrzeug ein Übertragungsmedium (50) zu einer Fahrzeugelektronik (500) mit einer Bremssteuerung oder einer Fahrzeugsteuerung und eine Stromversorgungsleitung (53) zu einer Stromversorgungsquelle aufweist, wobei das Bremssystem Folgendes umfasst:
zumindest ein Funktionsmodul (100, 101), das mit einem Aktuator (301) und/oder einem Sensor (302, 303) koppelbar ist und eine Steuereinrichtung und eine Modulkommunikationsschnittstelle (150) aufweist, die ausgebildet sind, um zumindest eine der folgenden Funktionen bereitzustellen:
- Steuersignale für den Aktuator bereitzustellen und/oder Sensordaten zu erfassen,
- das zumindest eine Funktionsmodul (100, 101) und/oder den Aktuator und/oder den Sensor eindeutig zu identifizieren,
- Funktionen dem zumindest einem Funktionsmodul (100, 101) und/oder dem Aktuator und/oder dem Sensor zuzuweisen oder zu ändern,
- eine Beanspruchung eines Funktionsmoduls (100, 101) und/oder eines Zusatzmoduls (200) und/oder des Aktuators und/oder des Sensors zu ermitteln und ein Ergebnis bereitzustellen;
ein weiteres Funktionsmodul (102, 103), welches mit dem Funktionsmodul (101) koppelbar ist;
**gekennzeichnet durch**
eine universelle Schnittstelle (110) zur Übertragung von Steuerdaten über einen Signalkanal auf dem Übertragungsmedium (50) zwischen dem zumindest einen Funktionsmodul (100, 101) und der Fahrzeugelektronik (500), wobei die universelle Schnittstelle (110) ausgebildet ist, um Steuerdaten für das Funktionsmodul (101) und für das weitere Funktionsmodul (102, 103) selektiv weiterzuleiten, wobei über die universelle Schnittstelle (110) jedes Funktionsmodul innerhalb des Systems individuell identifizierbar ist und dazu eine Identifikation oder Adressen vergeben werden, die jedem Funktionsmodul (100) und jedem Zusatzmodul zugeordnet wird und eine eindeutige Identifizierung erlaubt und
wobei die universelle Schnittstelle (110) einen Stromversorgungsanschluss für das zumindest eine Funktionsmodul (100, 101, 102, 103) unabhängig von Steuerdaten bereitstellt, wobei das zumindest eine Funktionsmodul (100, 101, 102, ...) an ein Zusatzmodul (200) koppelbar ist, das eine vorbestimmte Funktion bereitstellt, und wobei
die universelle Schnittstelle (110) ausgebildet ist, um Informationen über das zumindest eine Funktionsmodul (100, 101, 102, ...) und/oder das Zusatzmodul (200) abzufragen und der Fahrzeugelektronik (500) zur Verfügung zu stellen, um eine Konfigurationsermittlung zu ermöglichen, und wobei
das zumindest eine Funktionsmodul (100, 101, 102, ...) und/oder das Zusatzmodul (200) ausgebildet sind, um sich bei der universellen Schnittstelle (110) anzumelden und abzumelden.

2. Modulares hydraulisches Bremssystem nach einem der vorhergehenden Ansprüche, wobei das zumindest eine Funktionsmodul (100, 101, 102, 103) mit einem Zusatzmodul (200) koppelbar ist,
**gekennzeichnet durch**
ein Steuermodul, das ausgebildet ist, um zumindest eine der folgenden Funktionen bereitzustellen:
- einen Austausch von dem zumindest einen Funktionsmodul (100) oder dem Zusatzmodul (200) zu erkennen,
- Funktionen dem zumindest einen Funktionsmodul (100, 101, 102,...) und/oder dem Aktuator und/oder dem Sensor zuzuweisen oder zu ändern,
- eine Beanspruchung des zumindest einen Funktionsmoduls (100, 101, 102,...) und/oder des Zusatzmoduls (200) und/oder des Aktuators und/oder des Sensors zu ermitteln und ein Ergebnis bereitzustellen,
- das zumindest eine Funktionsmodul (100, 101, 102,...) und/oder den Aktuator und/oder den Sensor eindeutig zu identifizieren und entsprechende Informationen bereitzustellen.

3. Modulares hydraulisches Bremssystem nach einem der Ansprüche 1 oder 2, **dadurch gekennzeichnet, dass**
die universelle Schnittstelle (110) ausgebildet ist, um die Steuerdaten über die Stromversorgungsleitung (53) zu übertragen.

4. Modulares hydraulisches Bremssystem nach einem der vorhergehenden Ansprüche,
**dadurch gekennzeichnet, dass**
die universelle Schnittstelle (110) an eine Festverdrahtungsleitung (53) zu der Fahrzeugelektronik (500) koppelbar ist, um sicherheitsrelevante Daten zwischen der Fahrzeugelektronik (500) und dem Funktionsmodul (100, 101, 102,...) zu übertragen.

5. Modulares hydraulisches Bremssystem nach einem der vorhergehenden Ansprüche, wobei das zumindest eine Funktionsmodul (101, 102, 103) zumindest zwei Funktionsmodule (101, 102, 103) umfasst,
**gekennzeichnet durch**
ein Übertragungsmedium (50), das einen universellen Bus umfasst und die zumindest zwei Funktionsmodule funktionsunabhängig verbindet, und
die zumindest zwei Funktionsmodule (100, 101, 102,...) ausgebildet sind, um alle Daten zwischen den Funktionsmodulen (100, 101, 102,...) und der Fahrzeugelektronik (500) nur über das Übertragungsmedium (50) unter Nutzung der universellen Schnittstelle (110) und des universellen Buses zu übertragen.

6. Modulares hydraulisches Bremssystem nach einem der vorhergehenden Ansprüche,
**dadurch gekennzeichnet, dass**
das Übertragungsmedium (50) drahtgebunden oder drahtlos oder glasfaserbasiert ist.

7. Modulares hydraulisches Bremssystem nach einem der vorhergehenden Ansprüche,
**dadurch gekennzeichnet, dass**
die universelle Schnittstelle (110) ausgebildet ist, um eine parallele Datenübertragung für verschiedene Funktionsmodule (101, 102, ...) über das Übertragungsmedium (50) durchzuführen.

8. Modulares hydraulisches Bremssystem nach einem der vorhergehenden Ansprüche,
**gekennzeichnet durch**
einen Spannungswandler (44), der ausgebildet ist, um eine universelle Spannungsversorgung für das zumindest eine Funktionsmodul (101, 102, 103) bereitzustellen, so dass ohne Änderung der universellen Schnittstelle (110) verschiedene Versorgungsspannungen nutzbar sind.

9. Modulares hydraulisches Bremssystem nach einem der vorhergehenden Ansprüche,
**dadurch gekennzeichnet, dass**
das zumindest eine Funktionsmodul (100, 101, 102,...) zumindest eine der folgenden Komponenten aufweist: ein Hydrogerät, ein Bremssattel, ein Gleitschutzmodul, ein Sensormodul, eine Bremsmittelenergiewandlungseinheit, ein Hilfslösegerät, eine Sandung, eine Magnetschienenbremse; und
die universelle Schnittstelle (110) ausgebildet ist, um spezifische Steuerdaten an verschiedene Funktionsmodule (100, 101, 102,...) weiterzuleiten.

10. Schienenfahrzeug mit:
- einer Fahrzeugelektronik (50);
- einer Spannungsversorgung (43);
- einem modularen hydraulischen Bremssystem nach einem der Ansprüche 1 bis 9; und
- einem Übertragungsmedium (50), das zumindest einen Signalkanal bereitstellt, um die Steuerdaten zwischen der Fahrzeugelektronik (500) und einem oder mehreren Funktionsmodulen (100, 101, 102,...) auszutauschen.

11. Verfahren zur Datenübertragung auf einem Übertragungsmedium (50) eines Schienenfahrzeugs, wobei das Schienenfahrzeug eine Stromversorgungsleitung (53) zu einer Stromversorgungsquelle aufweist, **gekennzeichnet durch:**
- Übertragen (S110) von Steuerdaten für ein modulares hydraulisches Bremssystem zwischen einer universellen Schnittstelle (110) und einer Fahrzeugelektronik (500);
- Übertragen (S120) von Funktionsmoduldaten zwischen der universellen Schnittstelle (110) und selektiv zu zumindest einem Funktionsmodul (101, 102, 103...) unter Nutzung einer Modulkommunikationsschnittstelle (150) des zumindest einen Funktionsmoduls (101, 102, 103 ...), wobei über die universelle Schnittstelle (110) jedes Funktionsmodul innerhalb des Systems individuell identifizierbar ist und dazu eine Identifikation oder Adressen vergeben werden, die jedem Funktionsmodul (100) und jedem Zusatzmodul zugeordnet wird und eine eindeutige Identifizierung erlaubt, und wobei die universelle Schnittstelle (110) einen Stromversorgungsanschluss für das zumindest eine Funktionsmodul (100, 101, 102, 103) unabhängig von Steuerdaten bereitstellt; und
- Umwandeln (S130) der Funktionsmoduldaten in Steuerdaten oder der Steuerdaten in Funktionsmoduldaten durch eine universelle Schnittstelle (110), wobei das zumindest eine Funktionsmodul (100, 101, 102, ...) an ein Zusatzmodul (200) koppelt, das eine vorbestimmte Funktion bereitstellt, und wobei die universelle Schnittstelle (110) Informationen über das zumindest eine Funktionsmodul (100, 101, 102, ...) und/oder das Zusatzmodul (200) abfragt und der Fahrzeugelektronik (500) zur Verfügung zu stellen, um eine Konfigurationsermittlung zu ermöglichen,
und wobei das zumindest eine Funktionsmodul (100, 101, 102, ...) und/oder das Zusatzmodul (200) sich bei der universellen Schnittstelle (110) anmelden und abmelden.

## Claims

1. Modular hydraulic brake system for a rail vehicle, wherein the rail vehicle comprises a transmission medium (50) for transmitting to a vehicle electronic system (500) having a brake controller or a vehicle controller and a power supply line (53) to a power supply source, the brake system comprising the following:
at least one function module (100, 101), which can be coupled to an actuator (301) and/or a sensor (302, 303) and has a control unit and a module communication interface (150) designed to provide at least one of the following functions:
- to make available control signals for the actuator and/or to acquire sensor data,
- to identify unambiguously the at least one function module (100, 101) and/or the actuator and/or the sensor,
- to assign functions to the at least one function module (100, 101) and/or to the actuator and/or to the sensor or to change said functions,
- to determine loading of a function module (100, 101) and/or of an additional module (200) and/or of the actuator and/or of the sensor and to make available a result;
a further function module (102, 103), which can be coupled to the function module (101);
**characterised by**
a universal interface (110) for transmitting control data, via a signal channel, on the transmission medium (50) between the at least one function module (100, 101) and the vehicle electronics system (500), wherein the universal interface (110) is designed to selectively transfer control data for the function module (101) and the further function module (102, 103), wherein each function module within the system can be individually identified via the universal interface (110) and an identification or addresses assigned to each function module (100) and each additional function module is/are awarded for this purpose and an unambiguous identification is permitted, and wherein the universal interface (110) makes available a power supply connection for the at least one function module (100, 101, 102, 103) independent of control data, wherein the at least one function module (100, 101, 102, ...) can be coupled to an additional module (200) making available a predetermined function, and wherein
the universal interface (110) is designed to interrogate information about the at least one function module (100, 101, 102, ...) and/or the additional module (200) and to make it available to the vehicle electronics system (500), in order to permit a determination of a configuration, and wherein
the at least one function module (100, 101, 102, ...) and/or the additional module (200) is/are designed to log in and out at the universal interface (110).

2. Modular hydraulic brake system according to any of the preceding claims, wherein the at least one function module (100, 101, 102, 103) can be coupled to an additional module (200),
**characterised by**
a control module designed to make available at least one of the following functions:
- to detect an exchange of the at least one function module (100) or of the additional module (200),
- to assign functions to the at least one function module (100, 101, 102, ...) and/or to the actuator and/or to the sensor or to change said functions,
- to determine loading of the at least one function module (100, 101, 102, ...) and/or of the additional module (200) and/or of the actuator and/or of the sensor and to make available a result,
- to identify unambiguously the at least one function module (100, 101, 102, ...) and/or the actuator and/or the sensor and to make available corresponding information.

3. Modular hydraulic brake system according to claim 1 or 2,
**characterised in that**
the universal interface (110) is designed to transmit the control data via the power supply line (53).

4. Modular hydraulic brake system according to any of the preceding claims,
**characterised in that**
the universal interface (110) can be coupled to a hard wire line (53) leading to the vehicle electronics system (500), in order to transmit safety-relevant data between the vehicle electronics system (500) and the function module (100, 101, 102, ...).

5. Modular hydraulic brake system according to any of the preceding claims, wherein the at least one function module (101, 102, 103) comprises at least two function modules (101, 102, 103),
**characterised by**
a transmission medium (50), which comprises a universal bus and which connects the at least two function modules function-independently, and
in that the at least two function modules (100, 101, 102, ...) are designed to transmit all the data between the function modules (100, 101, 102, ...) and the vehicle electronics system (500) only via the transmission medium (50), using the universal interface (110) and the universal bus.

6. Modular hydraulic brake system according to any of the preceding claims,
**characterised in that**
the transmission medium (50) is wire-bound or wireless or glass-fibre-based.

7. Modular hydraulic brake system according to any of the preceding claims,
**characterised in that**
the universal interface (110) is designed to carry out a parallel data transmission for various function modules (101, 102, ...) via the transmission medium (50).

8. Modular hydraulic brake system according to any of the preceding claims,
**characterised by**
a voltage transformer (44), which is designed to make available a universal voltage supply for the at least one function module (101, 102, 103), with the result that various supply voltages can be used without changing the universal interface (110).

9. Modular hydraulic brake system according to any of the preceding claims,
**characterised in that**
the at least one function module (100, 101, 102, ...) has at least one of the following components: a hydraulic unit, a brake calliper, an anti-skid module, a sensor module, a braking medium energy conversion unit, an assistance triggering unit, a sanding device, a magnetic rail brake; and
the universal interface (110) is designed to transfer specific control data to various function modules (100, 101, 102,...).

10. Rail vehicle with:
- a vehicle electronics system (50);
- a voltage supply (43);
- a modular hydraulic brake system as claimed in one of claims 1 to 9; and
- a transmission medium (50), which makes available at least one signal channel in order to exchange the control data between the vehicle electronics system(500) and one or more function modules (100, 101, 102, ...).

11. Method for transmitting data on a transmission medium (50) of a rail vehicle, the rail vehicle having a power supply line (53) to a power supply source,
**characterised by**
- transmitting (S110) control data for a modular hydraulic brake system between a universal interface (110) and a vehicle electronics system (500);
- transmitting (S120) function module data between the universal interface (110) and at least one function module (101, 102, 103, ...) using a module communication interface (150) of the at least one function module (101, 102, 103, ...), wherein each function module within the system can be individually identified via the universal interface (110) and an identification or addresses assigned to each function module (100) and each additional function module is/are awarded for this purpose and an unambiguous identification is permitted, and wherein the universal interface (110) makes available a power supply connection for the at least one function module (100, 101, 102, 103) independent of control data; and
- converting (S130) the function module data into control data or the control data into function module data by means of a universal interface (110), wherein the at least one function module (101, 102, 103, ...) couples to an additional module (200) making available a predetermined function, and wherein the universal interface (110) is designed to interrogate information about the at least one function module (100, 101, 102, ...) and/or the additional module (200) and to make it available to the vehicle electronics system (500), in order to permit a determination of a configuration, and wherein the at least one function module (100, 101, 102, ...) and/or the additional module (200) is/are designed to log in and out at the universal interface (110).

## Revendications

1. Système de freinage hydraulique modulaire d'un véhicule ferroviaire, dans lequel le véhicule ferroviaire a un support (50) de transmission vers une électronique (500) du véhicule ayant une commande de frein ou une commande de véhicule et une ligne (53) d'alimentation en courant allant à une source d'alimentation en courant, le système de freinage comprenant ce qui suit :
au moins un module (100, 101) fonctionnel, qui peut être couplé à un actionneur (301) et/ou à un capteur (302, 303) et qui a un dispositif de commande et une interface (150) de communication de module constituée pour disposer au moins de l'une des fonctions suivantes :
- disposer de signaux de commande de l'actionneur et/ou acquérir des données de capteur,
- identifier de manière univoque le au moins un module (100, 101) fonctionnel et/ou l'actionneur et/ou le capteur,
- attribuer ou modifier des fonctions au au moins un module (100, 101) fonctionnel et/ou à l'actionneur et/ou au capteur,
- déterminer une sollicitation d'un module (100, 101) fonctionnel et/ou d'un module (200) supplémentaire et/ou de l'actionneur et/ou du capteur et disposer d'un résultat ;
un autre module (102, 103) fonctionnel, qui peut être couplé au module (101) fonctionnel ;
**caractérisé par**
une interface (110) universelle de transmission de données par un canal de signal au support (50) de transmission entre le au moins un module (100, 101) fonctionnel et l'électronique (500) du véhicule, dans lequel l'interface (110) universelle est constituée pour acheminer sélectivement des données de commande du module (101) fonctionnel et de l'autre module (102, 103) fonctionnel, dans lequel par l'interface (110) universelle, chaque module fonctionnel au sein du système peut être identifié individuellement et ainsi une identification ou une adresse être attribuée, qui est associée à chaque module (100) fonctionnel et à chaque module supplémentaire et qui permet une identification univoque et
dans lequel l'interface (110) universelle met à disposition une borne d'alimentation en courant pour le au moins un module (100, 101, 102, 103) fonctionnel indépendamment de données de commande, dans lequel le au moins un module (100, 101, 102, ...) fonctionnel peut être couplé à un module (200) supplémentaire qui met à disposition une fonction définie à l'avance et dans lequel
l'interface (110) universelle est constituée pour demander des informations sur le au moins un module (100, 101, 102, ...) fonctionnel et/ou le module (200) supplémentaire et les mettre à disposition de l'électronique (500) du véhicule, afin de rendre possible une détermination de configuration, et dans lequel le au moins un module (100, 101, 102, ...) fonctionnel et/ou le module (200) supplémentaire sont constitués pour s'annoncer auprès de l'interface (110) universelle et en prendre congé.

2. Système de freinage hydraulique modulaire suivant l'une des revendications précédentes, dans lequel le au moins un module (100, 101, 102, 103) fonctionnel peut être couplé à un module (200) supplémentaire,
**caractérisé par**
un module de commande, qui est constitué pour disposer d'au moins l'une des fonctions suivantes :
- détecter un remplacement du au moins un module (100) fonctionnel ou du module (200) supplémentaire,
- attribuer des fonctions au au moins un module (100, 101, 102, ...) et/ou à l'actionneur et/ou au capteur ou les modifier,
- déterminer une sollicitation du au moins un module (100, 101, 102, ...) fonctionnel et/ou du module (200) supplémentaire et/ou de l'actionneur et/ou du capteur et disposer d'un résultat,
- identifier de manière univoque le au moins un module (100, 101, 102, ...) fonctionnel et/ou l'actionneur et/ou le capteur et mettre à disposition des informations correspondantes.

3. Système de freinage hydraulique modulaire suivant la revendication 1 ou 2, **caractérisé en ce que**
l'interface (110) universelle est constituée pour transmettre les données de commande par la ligne (53) d'alimentation en courant.

4. Système de freinage hydraulique modulaire suivant l'une des revendications précédentes,
**caractérisé en ce que**
l'interface (110) universelle peut être couplée à une ligne (53) de câblage fixe allant à l'électronique (500) du véhicule, afin de transmettre des données pertinentes du point de vue de la sécurité entre l'électronique (500) du véhicule et le module (100, 101, 102, ...) fonctionnel.

5. Système de freinage hydraulique modulaire suivant l'une des revendications précédentes, dans lequel le au moins un module (101, 102, 103) fonctionnel comprend au moins deux modules (101, 102, 103) fonctionnels,
**caractérisé par**
un support (50) de transmission, qui comprend un bus universel et qui relie, indépendamment de la fonction, les au moins deux modules fonctionnels, et
les au moins deux modules (100, 101, 102, ...) fonctionnels sont constitués pour transmettre toutes les données entre les modules (100, 101, 102, ...) fonctionnels et l'électronique (500) du véhicule seulement par le support (50) de transmission en utilisant l'interface (110) universelle et le bus universel.

6. Système de freinage hydraulique modulaire suivant l'une des revendications précédentes,
**caractérisé en ce que**
le support (50) de transmission est filaire ou sans fil ou repose sur la fibre de verre.

7. Système de freinage hydraulique modulaire suivant l'une des revendications précédentes,
**caractérisé en ce que**
l'interface (110) universelle est constituée pour effectuer, par le support (50) de transmission, une transmission de données parallèle pour divers modules (101, 102, ...).

8. Système de freinage hydraulique modulaire suivant l'une des revendications précédentes,
**caractérisé par**
un transformateur (44) de tension qui est constitué pour disposer d'une alimentation en tension universelle du au moins un module (101, 102, 103) fonctionnel de manière à pouvoir utiliser diverses tensions d'alimentation sans modifier l'interface (110) universelle.

9. Système de freinage hydraulique modulaire suivant l'une des revendications précédentes,
**caractérisé en ce que**
le au moins un module (100, 101, 102, ...) fonctionnel a au moins l'un des composants suivants :
un appareil hydraulique, un étrier de frein, un module antidérapant, un module de capteur, une unité de transformation d'énergie d'un moyen de freinage, un appareil de desserrage auxiliaire, un dispositif de sablage, un frein électromagnétique sur rail ; et
l'interface (110) universelle est constituée pour acheminer des données de commande spécifiques à divers modules (100, 101, 102, ...) fonctionnels.

10. Véhicule ferroviaire comprenant :
- une électronique (50) de véhicule ;
- une alimentation (43) en tension ;
- un système de freinage hydraulique modulaire suivant l'une des revendications 1 à 9 ; et
- un support (50) de transmission, qui dispose d'au moins un canal de signal pour échanger les données de commande entre l'électronique (500) du véhicule et un ou plusieurs modules (100, 102, 102, ...) fonctionnels.

11. Procédé de transmission de données sur un support (50) de données d'un véhicule ferroviaire, le véhicule ferroviaire ayant un ligne (53) d'alimentation en courant allant à une source d'alimentation en courant,
**caractérisé par** :
- la transmission (S110) de données de commande d'un système de freinage hydraulique modulaire entre une interface (110) universelle et une électronique (500) du véhicule ;
- la transmission (S120) de modules fonctionnels entre l'interface (110) universelle et, sélectivement, au moins un module (101, 102, 103, ...) fonctionnel en utilisant une interface (150) de communication de module du au moins un module (101, 102, 103, ...) fonctionnel, dans lequel, par l'interface (110) universelle, chaque module fonctionnel au sein du système peut être identifié individuellement et être ainsi attribué une identification ou une adresse, qui est associée à chaque module (100) fonctionnel et à chaque module supplémentaire et permet une identification univoque et dans lequel l'interface (110) universelle met à disposition, indépendamment de données de commande, une borne d'alimentation en courant pour le au moins un module (100, 101, 102, 103) fonctionnel et
- la transformation (S130) des données de module fonctionnel en données de commande ou des données de commande en données de module fonctionnel par une interface (110) universelle, dans lequel le au moins un module (100, 101, 102, ...) fonctionnel est couplé à un module (200) supplémentaire, qui met à disposition une fonction définie à l'avance et dans lequel l'interface (110) universelle demande des informations sur le au moins un module (100, 101, 102, ...) fonctionnel et/ou le module (200) supplémentaire et les met à disposition de l'électronique (500) du véhicule afin de rendre possible une détermination de configuration,
et dans lequel le au moins un module (100, 101, 102, ...) fonctionnel et/ou le module (200) supplémentaire s'annonce auprès de l'interface (110) universelle et en prenne congé.
